# EUROPEAN PATENT SPECIFICATION

(11) **EP 1 639 777 B1**
(45) Date of publication and mention of the grant of the patent: **14.03.2007**
(21) Application number: 03763061.3
(22) Date of filing: 27.06.2003
(51) Int. Cl.: H04L 29/06

(54) **SECURE TWO-MESSAGE SYNCHRONIZATION IN WIRELESS NETWORKS**
SICHERE SYNCHRONISTION MITTELS ZWEIER MITTEILUNGEN IN DRAHTLOSEN NETZWERKEN
SYNCHRONISATION SECURISEE DE DEUX MESSAGES DANS DES RESEAUX SANS FIL

(30) Priority: 05.07.2002 US 189843
(43) Date of publication of application: 29.03.2006
(73) Proprietor: Intel Corporation, Santa Clara, CA 95052 (US)
(72) Inventor: WALKER, Jesse, Portland, OR 97229 (US)
(74) Representative: Dunlop, Hugh Christopher
(86) International application number: PCT/US2003/020623
(87) International publication number: WO 2004/006535

(56) References cited:
- US-A1- 2001 034 223
- PATIYOOT D ET AL: "WAAS: a security service for wireless ATM networks" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 3034-3038, XP010353361 ISBN: 0-7803-5435-4
- "Part 11: Wireless LAN Medium Access Control (MAC) and Physical Layer (PHY) Specifications" ANSI/IEEE STD 802.11, XX, XX, 4 May 1999 (1999-05-04), pages 1,10-69, XP002278910 cited in the application
- GOLLMANN D: "What do we mean by entity authentication?" SECURITY AND PRIVACY, 1996. PROCEEDINGS., 1996 IEEE SYMPOSIUM ON OAKLAND, CA, USA 6-8 MAY 1996, LOS ALAMITOS, CA, USA,IEEE COMPUT. SOC, US, 6 May 1996 (1996-05-06), pages 46-54, XP010164924 ISBN: 0-8186-7417-2
- KEHNE A ET AL: "A NONCE-BASED PROTOCOL FOR MULTIPLE AUTHENTICATIONS" OPERATING SYSTEMS REVIEW (SIGOPS), ACM HEADQUARTER. NEW YORK, US, vol. 26, no. 4, 1 October 1992 (1992-10-01), pages 84-89, XP000330582
- NEUMAN B C ET AL: "A NOTE ON THE USE OF TIMESTAMPS AS NONCES" OPERATING SYSTEMS REVIEW (SIGOPS), ACM HEADQUARTER. NEW YORK, US, vol. 27, no. 2, 1 April 1993 (1993-04-01), pages 10-14, XP000360298
- SHIN-KAI CHIN ET AL: "Formal methods applied to secure network engineering" ENGINEERING OF COMPLEX COMPUTER SYSTEMS, 1996. PROCEEDINGS., SECOND IEEE INTERNATIONAL CONFERENCE ON MONTREAL, QUE., CANADA 21-25 OCT. 1996, LOS ALAMITOS, CA, USA,IEEE COMPUT. SOC, US, 21 October 1996 (1996-10-21), pages 344-351, XP010201534 ISBN: 0-8186-7614-0

## Description

### Background

This invention relates generally to networks which are established pursuant to wireless protocols.

A variety of wireless protocols enable short-range wireless networks between processor-based and non-processor-based systems. A station in one network may be mobile and may be moved from area to area so that it eventually interacts with one or more networks.

One such wireless network protocol is disclosed in US 2001/034223 Al, which describes a method and system for sending location dependent and personal identification information to a public safety answering point. Base stations for receiving a transmission packet signal having a transmitter identification number are located throughout an area where personal security coverage is desired. Whenever a personal security transmitter is activated, it is received by one or more base stations.

Each base station has a signal receiving unit for receiving a transmission packet signal and a signal processing unit for processing a transmission packet signal and generating a base station packet. Base station packets contain both a transmitter identification number and location information about the activated transmitter. After a base station packet is generated, it is sent to a command centre for processing. If a valid base station packet is received at a command centre, information contained in the base station packet is used to determine the closest base station to the activated transmitter and to retrieve personal identification information about the person to whom the transmitter was issued. This location and personal identification information is then displayed at the command centre or public safety answering point.

Before a network may wish to communicate with an in-range mobile station, a network may wish to authenticate the mobile station to ensure that network security will not be compromised as a result of such communications.

In Patiyoot D et al. "WASS : a security service for wireless ATM networks" (Vehicular Technology Conference, 1999. VTC 1999 - FALL. IEEE VTS 50^{th} Amsterdam, Netherlands 19-22 September 1999, Piscataway, NJ, USA, IEEE, US, 19 September 1999 (1999-09-19), pages 3034-3038 XP010353361 ISBN 0-7803-5435-4) another wireless protocol is disclosed wherein a wireless request message is generated by a first device to attempt to establish a secure link with another (second) device. The request message comprises a timestamp generated by the first device. Upon receipt of the message at the second device, the second device generates a message which includes the timestamp generated by the first device and sends this message to the first device. When the first device receives this message, it checks that the timestamp received matches the timestamp that was initially sent to verify that the message is valid. Unfortunately, this method is venerable to replay attacks.

It is therefore desirable to have a relatively simple way to enable wireless devices to communicate with one another in a secure fashion.

### Brief Description of the Drawings

Figure 1 is a schematic depiction of one embodiment of the present invention; and
Figure 2 is a flow chart for one embodiment of the present invention.

### Detailed Description

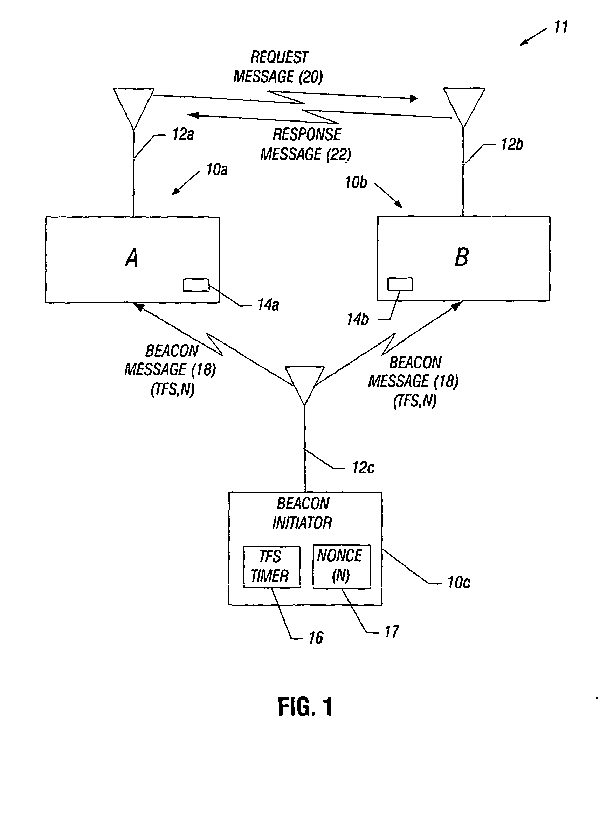

Referring to Figure 1, a network 11 may include at least two devices 10a and 10b that communication over an appropriate wireless protocol. In one embodiment, that wireless protocol may be the IEEE 802.11 protocol. (ANSI/IEEE Std. 802.11, 1999 Edition), IEEE Standards Board, Piscataway, N.Y. 08855. Each device 10 may include an antenna 12 that may, for example, be a dipole antenna.

Each communicating party 10a or 10b may be part of the same network. The parties 10a and 10b may be a station and an access point or they may be a pair of stations in an ad hoc network or a side-band channel or repeater, to mention a few examples. A wireless communication channel between the devices 10a and 10b.

Each of the devices 10a and 10b may receive a beacon frame or message 18 from a beacon initiator 10c. Like the devices 10a and 10b, the beacon initiator 10c may be any wireless device including a station, an access point, a side-band channel or repeater, to mention a few examples. The beacon initiator 10c may generate a beacon with a beacon timestamp field containing a copy of the timer syncronization function (TSF) 16 and nonce (N) 17. The beacon initiator 10c may simply be a party that produces beacon messages pursuant to an 802.11 protocol. Each beacon message announces important protocols for the network and is typically broadcast to all the members of the network. Among the beacon parameters is a common notation of time, represented by the TFS 16. For example, devices in an 802.11 network may synchronize to the network's notion of time within 4 microseconds.

In accordance with one embodiment of the present invention, the beacon message 18 may also include a nonce "N" 17. The beacon initiator 10c may establish its nonce 17 whenever it initializes and the initiator 10c uses its nonce 17 until the initiator 10c again reinitializes in one embodiment. The nonce 17 may be selected so it is never reused across any reinitialization of the beacon initiator 10c in one embodiment. Thus, the nonce value may be a real time wall clock value, a randomly generated value, or some other value that is not reused until the crytographic key used to protect the message exchanges is changed.

When the device 10a wishes to establish a synchronized state with the device 10b, the device 10a consults the latest beacon message 18 to learn the present TFS 16 and beacon nonce 17. The device 10a then formulates a request message 20 to the device 10b. The request message 20, in one embodiment, may include the identity of the device 10a ("id_{A}"), the identity of device 10b ("id_{B}"), the state ("s") that the device 10a wishes to synchronize to, its notion of time ("T") based on the TFS 16, the beacon nonce ("N") 17, the randomly generated nonce ("N_{A}") from the device 10a and an electronic signature. The signature may be computed as a message integrity code (MIC).

A cryptographically secure message integrity code can be used to sign data messages sent over an 802.11 channel. Examples of MICs include Hashing for Message Authentication -Secure Hash Algorithm (HMAC-SHA-1), See M. Bellare, et al., RFC 2104 (Feb. 1997), Advanced Encryption Standard-Cipher Blocking Chaining-Message Authentication Code (AES-CBC-MAC), and Parallelizable MAC (PMAC). Any MIC may be used in accordance with some embodiments of the present invention.

The devices 10a and 10b may share a key ("K") utilized for data authentication. The key may be derived from a password, may be dynamically assigned, or may be generated in some other fashion. Generally, it is desirable that the key be distributed in a secure manner so that it is unknown to possible adversaries.

Thus, in one embodiment, the signature may be computed as an MIC using the authentication key over the following data:
A to B: id_{A},id_{B},s,T,N,N_{A},MIC_{K}(id_{A},id_{B},s,T,N,N_{A})
The order of these message elements is immaterial, and some of the values may be implicit. In particular, the state s may be implicit or it may be only a reference to a state. It is, however, desirable in some embodiments that the device 10a's own nonce N_{A} be unpredictable and, also, never be repeated during the lifetime of the key K.

When the device 10b receives the request message 20, it shares the authentication K with the party identified by id_{A}. The device 10b then determines whether the request message's notion of time T matches its own. In other words, the device 10b determines whether the message 20 is sufficiently recent that the nonce N also matches the nonce presently used in beacon messages 18 and that the device 10b is the intended party in this synchronization protocol.

The device 10b also uses the authentication key to verify the MIC signature over the request message 22. If any of these checks fail, then the device 10b interprets the message as invalid and declines the request to synchronize the state s.

However, if all of these checks succeed, the device 10b interprets the request message as valid. The device 10b can treat the request as valid because it contains the time T and the beacon nonce N, identifying this request message 20 as a recently generated message and confirms that the data has been protected by the MIC. By assumption, the key K is unknown to any adversary and the MIC is cryptographically secure, so it is computationally infeasible for an adversary to produce the message in the required time frame.

When it receives a valid synchronization request message 20, the device 10b formats and returns the response message 22. The response message 22 may be similar to the request message 20, except it may not include the time T and the beacon nonce N in one embodiment:
B to A: id_{A},id_{B},s,NA,MIC_{K}(id_{A},id_{B},s,N_{A})
When the device 10a receives the message 22, it verifies that the response matches the request message 20 and that the message's MIC is correct. In particular, the device 10a verifies the timeliness of the request message 22 by checking the response message 22 including the nonce N_{A}. If the request message 22 passes these tests, then the device 10a knows that it has synchronized the state s with the device 10b. Moreover, it has done so with only two messages in some embodiments.

As indicated in Figure 1, each device 10a or 10b may include a storage 14a or 14b that may store code or software for implementing the secure two message synchronization protocol just described. In other embodiments the secure two message synchronization protocol may be implemented in hardware or logic.

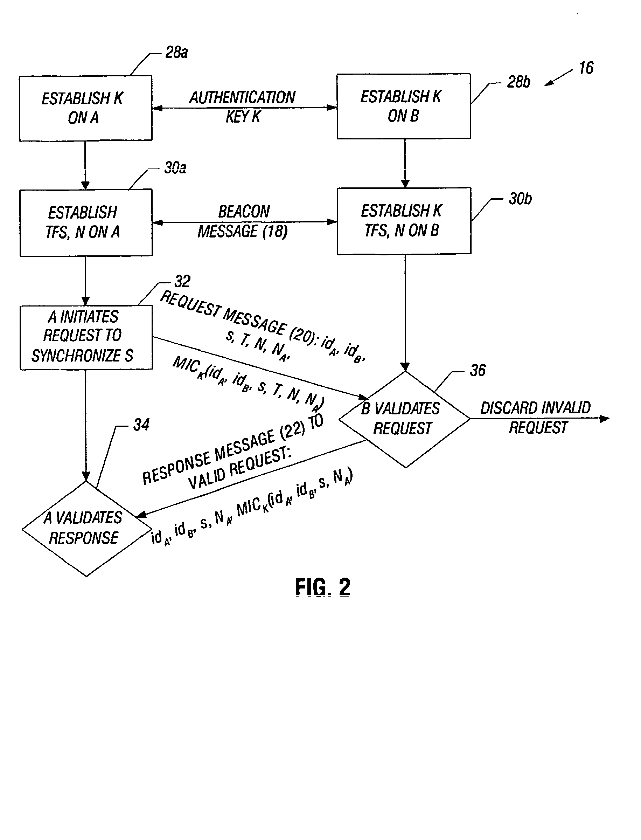

Thus, referring to Figure 2, initially, on the left side, the device 10a establishes K, as indicated in block 28a. Similarly, the device 10b establishes K, as indicated in block 28b. Thus, both the devices 10a and 10b have the authentication key K.

Next, a beacon message 18 may be provided to both devices 10a and 10b. As a result, the TFS and the beacon nonce N may be established on each device 10, as indicated in blocks 30a and 30b. The device 10a, which is the message initiator, initiates a request message 20 to synchronize s, as indicated in block 32. As indicated by the arrow from block 32 to diamond 36, the request may include the parameters id_{A}, id_{B}, s, T, N, N_{A}, MIC_{K}(id_{A}, id_{B}, s, T, N, N_{A}).

When the request message 20 is received at device 10b, the device 10b validates the message 20, as indicated in diamond 36, and provides a response message 22 to any valid requests. The response message may include the parameters id_{A}, id_{B}, s, N_{A}, MIC_{K}(id_{A}, id_{B}, s, N_{A}). When the device 10a receives the response message 22, the device 10a validates the response, as indicated in diamond 34.

While the present invention has been described with respect to a limited number of embodiments, those skilled in the art will appreciate numerous modifications and variations therefrom. It is intended that the appended claims cover all such modifications and variations as fall within the present invention.

## Claims

1. A method comprising:
receiving at a first device (10a) a wireless beacon (18) wherein the beacon is broadcast to plural members of a wireless network (11) and includes an indication of time; and
**characterized by**:
generating a wireless request message (20) to establish secure synchronization with another device (10b) in the wireless network (11), the message including the indication of time.

2. The method of claim 1 including receiving a beacon with a timer synchronization function.

3. The method of claim 2 including generating a wireless request message that includes a nonce.

4. The method of claim 3 including generating a wireless request message that includes the timer synchronization function.

5. The method of claim 1 including receiving a unique nonce in a beacon message.

6. The method of claim 5 including establishing a synchronization state between two wireless devices on the wireless network.

7. The method of claim 6 including providing the identity of the first wireless device and the second wireless device in a request message sent to the second wireless device.

8. The method of claim 7 including generating a nonce at a first wireless device and including in the request message the nonce included with a beacon message and a nonce generated by the first wireless device.

9. The method of claim 8 including providing a secure key to said first and second devices.

10. The method of claim 9 including receiving a response message from said second wireless device.

11. The method of claim 10 including determining whether a request message that is received is sufficiently recent as to be considered authentic.

12. The method of claim 11 including using a nonce from the first wireless device to determine whether the request message is recent.

13. The method of claim 12 including identifying an authentication key in said request message and checking said authentication key.

14. The method of claim 13 including if the message is authentic, returning a response message.

15. The method of claim 14 including in said response message the identity of the first and second wireless devices.

16. The method of claim 15 including providing information about a synchronized state between said first and second wireless devices.

17. The method of claim 16 including returning a nonce received from said first wireless device to said first wireless device.

18. The method of claim 17 including providing a message integrity code to said first wireless device.

19. The method of claim 18 wherein said message integrity code includes data about the identities of the first and second wireless devices.

20. A computer program product for storing instructions that, if executed, enable a processor-based system to perform the method of any one of claims 1 to 19.

21. A wireless device comprising:
a processor; and
the computer program product of claim 20.

22. A wireless device comprising:
means for receiving a wireless beacon including an indication of time; and
**characterized by**:
means for generating a wireless request message to establish secure synchronization with another device in a wireless network by sending a message including the indication of time.

## Patentansprüche

1. Verfahren, umfassend:
das Empfangen an einer ersten Vorrichtung (10a) eines Funksignalfeuers (18), wobei das Signalfeuer an mehrere Teilnehmer eines Funknetzwerks (11) rundgesendet wird und eine Zeitanzeige enthält; und
**gekennzeichnet durch**:
Erzeugen einer Funk-Anfragenachricht (20), um eine sichere Synchronisation mit einer anderen Vorrichtung (10b) in dem Funknetzwerk (11) herzustellen, wobei die Nachricht die Zeitanzeige enthält.

2. Verfahren nach Anspruch 1, das das Empfangen eines Signalfeuers mit einer Zeitgebersynchronisationsfunktion umfasst.

3. Verfahren nach Anspruch 2, das das Erzeugen einer eine Zufallszahl enthaltenden Funk-Anfragenachricht umfasst.

4. Verfahren nach Anspruch 3, das das Erzeugen einer die Zeitgebersynchronisationsfunktion enthaltenden Funk-Anfragenachricht umfasst.

5. Verfahren nach Anspruch 1, das das Empfangen einer eindeutigen Zufallszahl in einer Signalfeuernachricht umfasst.

6. Verfahren nach Anspruch 5, das das Herstellen eines Synchronisationszustands zwischen zwei Funkvorrichtungen in dem Funknetzwerken umfasst.

7. Verfahren nach Anspruch 6, das die Bereitstellung der Identität der ersten Funkvorrichtung und der zweiten Funkvorrichtung in einer an die zweite Funkvorrichtung gesendeten Anfragenachricht umfasst.

8. Verfahren nach Anspruch 7, das das Erzeugen einer Zufallszahl an einer ersten Funkvorrichtung und das Einschließen einer in einer Signalfeuernachricht enthaltenen Zufallszahl und einer durch die erste Funkvorrichtung erzeugten Zufallszahl in die Anfragenachricht umfasst.

9. Verfahren nach Anspruch 8, das das Bereitstellen eines sicheren Schlüssels an die erste und zweite Vorrichtung enthält.

10. Verfahren nach Anspruch 9, das das Empfangen einer Antwortnachricht von der zweiten Funkvorrichtung enthält.

11. Verfahren nach Anspruch 10, das das Bestimmen enthält, ob eine empfangene Anfragenachricht ausreichend aktuell ist, damit sie als authentisch angesehen werden kann.

12. Verfahren nach Anspruch 11, das die Verwendung einer Zufallszahl von der ersten Funkvorrichtung enthält, um zu bestimmen, ob die Anfragenachricht aktuell ist.

13. Verfahren nach Anspruch 12, das die Identifizierung eines Authentifikationsschlüssels in der Anfragenachricht und das Prüfen des Authentifikationsschlüssels enthält.

14. Verfahren nach Anspruch 13, das das Zurückgeben einer Antwortnachricht enthält, wenn die Nachricht authentisch ist.

15. Verfahren nach Anspruch 14, das in der Antwortnachricht die Identität der ersten und zweiten Funkvorrichtung enthält.

16. Verfahren nach Anspruch 15, das das Bereitstellen von Informationen über einen synchronisierten Zustand zwischen der ersten und der zweiten Funkvorrichtung enthält.

17. Verfahren nach Anspruch 16, das das Zurückgeben einer von der ersten Funkvorrichtung empfangenen Zufallszahl an die erste Funkvorrichtung enthält.

18. Verfahren nach Anspruch 17, das das Bereitstellen eines Nachrichtenintegritätscodes an die erste Funkvorrichtung enthält.

19. Verfahren nach Anspruch 18, wobei der Nachrichtenintegritätscode Daten über die Identitäten der ersten und der zweiten Funkvorrichtung enthält.

20. Computerprogrammprodukt zum Speichern von Anweisungen, die bei Ausführung einem prozessorbasierten System das Ausführen des Verfahrens nach einem der Ansprüche 1 bis 19 ermöglicht.

21. Funkorrichtung, umfassend:
einen Prozessor; und
das Computerprogrammprodukt nach Anspruch 20.

22. Funkvorrichtung, umfassend:
Mittel zum Empfangen eines Funksignalfeuers, das eine Zeitanzeige enthält; und
**gekennzeichnet durch**:
Mittel zum Erzeugen einer Funk-Anfragenachricht zum Herstellen einer sicheren Synchronisation mit einer anderen Vorrichtung in einem Funknetzwerk **durch** Senden einer Nachricht, die die Zeitanzeige enthält.

## Revendications

1. Procédé comprenant :
la réception au niveau d'un premier dispositif (10a) d'un message radio balise (18) dans laquelle le message radio balise est diffusé à une pluralité d'éléments d'un réseau sans fil (11) et comprend une indication de temps ; et
**caractérisé par** :
la génération d'un message radio de demande (20) pour établir une synchronisation sécurisée avec un autre dispositif (10b) dans le réseau sans fil (11), le message comprenant l'indication de temps.

2. Procédé selon la revendication 1, comprenant la réception d'une trame avec une fonction de synchronisation de temporisateur.

3. Procédé selon la revendication 2, comprenant la génération d'un message radio de demande qui comprend un nonce.

4. Procédé selon la revendication 3, comprenant la génération d'un message radio de demande qui comprend la fonction de synchronisation de temporisateur.

5. Procédé selon la revendication 1, comprenant la réception d'un nonce unique dans un message balise.

6. Procédé selon la revendication 5, comprenant l'établissement d'un état de synchronisation entre deux dispositifs sans fil sur le réseau sans fil.

7. Procédé selon la revendication 6, comprenant la fourniture de l'identité du premier dispositif sans fil et du second dispositif sans fil dans un message de demande envoyé au second dispositif sans fil.

8. Procédé selon la revendication 7, comprenant la génération d'un nonce au niveau d'un premier dispositif sans fil et comprenant, dans le message de demande, le nonce compris dans un message balise et un nonce, généré par le premier dispositif sans fil.

9. Procédé selon la revendication 8, comprenant la fourniture d'une clé sécurité auxdits premier et second dispositifs.

10. Procédé selon la revendication 9, comprenant la réception d'un message de réponse par ledit second dispositif sans fil.

11. Procédé selon la revendication 10, comprenant la détermination du fait de savoir si un message de demande qui est reçu est suffisamment récent pour être considéré comme étant authentique.

12. Procédé selon la revendication 11, comprenant l'utilisation d'un nonce à partir du premier dispositif sans fil pour déterminer si le message de demande est récent.

13. Procédé selon la revendication 12, comprenant l'identification d'une clé d'identification dans ledit message de demande et la vérification de ladite clé d'authentification.

14. Procédé selon la revendication 13, comprenant, si le message est authentique, le renvoi d'un message de réponse.

15. Procédé selon la revendication 14, comprenant, dans ledit message de réponse, l'identité des premier et second dispositifs sans fil.

16. Procédé selon la revendication 15, comprenant la fourniture d'informations concernant l'état synchronisé entre lesdits premier et second dispositifs sans fil.

17. Procédé selon la revendication 16, comprenant le renvoi d'un nonce, reçu à partir dudit premier dispositif sans fil vers ledit premier dispositif sans fil.

18. Procédé selon la revendication 17, comprenant la fourniture d'un code d'intégrité de message audit premier dispositif sans fil.

19. Procédé selon la revendication 18, dans lequel ledit code d'intégrité de message comprend des données sur les identités des premier et second dispositifs sans fil.

20. Produit programme d'ordinateur pour mémoriser des instructions qui, si elles sont exécutées, permettent à un système à base de processeur d'effectuer le procédé de l'une quelconque des revendications 1 à 19.

21. Dispositif sans fil comprenant :
un processeur ; et
le produit programme d'ordinateur de la revendication 20.

22. Dispositif sans fil comprenant :
des moyens pour recevoir un message radio balise incluant une indication de temps ; et
**caractérisé par** :
des moyens pour générer un message radio de demande pour établir la synchronisation sécurisée avec un autre dispositif dans un réseau sans fil en envoyant un message comprenant l'indication de temps.
